# EUROPEAN PATENT SPECIFICATION

(11) **EP 3 608 370 B1**
(45) Date of publication and mention of the grant of the patent: **06.10.2021**
(21) Application number: 18306087.0
(22) Date of filing: 08.08.2018
(51) Int. Cl.: C09D 4/00, C09D 5/24, C09D 183/06, G02B 1/10

(54) **RADIATION-CURABLE HARD COATING COMPOSITIONS**
STRAHLUNGSHÄRTBARE HARTBESCHICHTUNGSZUSAMMENSETZUNGEN
COMPOSITIONS DE REVÊTEMENT DUR DURCISSABLES PAR RAYONNEMENT

(43) Date of publication of application: 12.02.2020
(73) Proprietor: Essilor International, 94220 Charenton-le-Pont (FR)
(72) Inventor: VALERI, Robert, Dallas, Texas 75235 (US)
(74) Representative: Jacobacci Coralis Harle

(56) References cited:
- EP-B1- 2 661 472
- US-A1- 2017 357 032
- US-A1- 2018 113 239
- US-B2- 9 557 449

## Description

### FIELD OF THE INVENTION

The present invention according to the appended claims 1 to 12 relates to UV-curable coating compositions for ophthalmic elements.

### BACKGROUND

Many optical article substrates include a hard coating applied over the base substrate to provide a transparent, abrasion resistant coating layer that protects the underlying optical substrate. Polysiloxane-based coatings are typically employed as abrasion-resistant hard coatings because of their high transparency and high abrasion resistance. These coatings are customarily formed by thermally curing a precursor composition that includes a hydrolysate of epoxyalkoxysilanes, silica, and a thermal curing catalyst. Thermal convection ovens are used to heat and cure the coatings, and curing times commonly exceed 1 hour.

In order to address the long cure times and high energy requirements of thermally-cured coating compositions, researchers have explored compositions that are curable by ultraviolet (UV) light. The use of ultraviolet light to cure hard coatings eliminates the high temperatures associated with thermal curing and reduces the likelihood of thermal substrate degradation. Further coating compositions for ophthalmic lenses are described in US 2018/113239 A1, US 2017/357032 A1, EP 2 661 472 B1 and US 9 557 449 B2.

Unlike most thermally-curable hard coating compositions, UV-curable compositions can be prepared in the absence of a diluting solvent. Current solvent-free, UV-curable ophthalmic substrate coatings do not offer the abrasion and scratch resistance that are provided by conventional solvent-based, thermally-cured coatings. There is a need in the industry for UV-curable hard coatings that can be cured with relative alarcity and exhibit abrasion resistance comparable to traditional thermally-cured coatings.

### SUMMARY

By combining non-hydrolyzed epoxy(alkoxy)silanes with dispersions of inorganic nanoparticles in acrylate monomers, the inventor has produced low viscosity coating compositions that can be cured by ultraviolet (UV) light. The resulting coatings exhibit abrasion resistance that is comparable to conventional solvent-borne sol-gel coatings.

According to claims 1 to 7, the present invention relates to a photocurable coating composition comprising a mixture of:
a) 25 to 65 wt% of the total solids of at least one non-hydrolyzedepoxy(alkoxy)silane;
b) 10 to 70 wt% of the total solids of at least one dispersion of inorganic nanoparticles and at least one acrylate;
c) 5 to 20 wt% of at least one acrylate binder or silane binder; and
d) at least one free radical photoinitiator, cationic photoinitiator, or a combination thereof;
wherein the composition does not comprise hydrolyzed epoxy(alkoxy)silane.

Present claims 8 to 11 of the present invention are directed to a method for manufacturing an abrasion-resistant, hard-coated substrate. In claims 8 to 11, the invention relates to a method for manufacturing an abrasion-resistant, hard-coated substrate, the method comprising coating an optical substrate with a photocurable coating composition comprising a mixture of:
a) 25 to 65 wt% of the total solids of at least one non-hydrolyzed epoxy(alkoxy)silane;
b) 10 to 70 wt% of the total solids of at least one dispersion of inorganic nanoparticles and at least one acrylate;
c) 5 to 20 wt% of at least one acrylate binder or silane binder; and
d) at least one free radical photoinitiator, cationic photoinitiator, or a combination thereof; and curing the photocurable composition coating with UV irradiation;
wherein the method does not comprise a hydrolysis step prior to curing.

In claims 12, the present invention relates to an optical article having at least one main surface comprising a coating obtained by depositing a photocurable coating composition comprising a mixture of:
a) 25 to 65 wt% of the total solids of at least one non-hydrolyzedepoxy(alkoxy)silane;
b) 10 to 70 wt% of the total solids of at least one dispersion of inorganic nanoparticles and at least one acrylate;
c) 5 to 20 wt% of at least one acrylate binder or silane binder; and
d) at least one free radical photo initiator, cationic photoinitiator, or a combination thereof; and curing the photocurable composition coating to produce an optical article having a coating which exhibits a relative abrasion resistance of at least 2.5, when tested according to ASTM F735.

"Ophthalmic lens," according to the disclosure, is defined as a lens adapted, namely for mounting in eyeglasses, whose function is to protect the eye and/or to correct vision. This lens can be an afocal, unifocal, bifocal, trifocal, or progressive lens. The ophthalmic lens may be corrective or un-corrective. Eyeglasses wherein ophthalmic lenses will be mounted could be either a traditional frame comprising two distinctive ophthalmic lenses, one for the right eye and one for the left eye, or with one ophthalmic lens that simultaneously faces the right and the left eyes, e.g., a mask, visor, helmet sight, or goggle. Ophthalmic lenses may be produced with traditional geometry as a circle or may be produced to be fitted to an intended frame.

Any embodiment of any of the disclosed compositions and/or methods can consist of or consist essentially of -rather than comprise/include/contain/have-any of the described elements and/or features and/or steps. Thus, in any of the claims, the term "consisting of" or "consisting essentially of" can be substituted for any of the open-ended linking verbs recited above, in order to change the scope of a given claim from what it would otherwise be using the open-ended linking verb.

The term "substantially" and its variations are defined as being largely but not necessarily wholly what is specified as understood by one of ordinary skill in the art, and in one non-limiting embodiment substantially refers to ranges within 10%, within 5%, within 1%, or within 0.5%. The term "about" or "approximately" or "substantially unchanged" are defined as being close to as understood by one of ordinary skill in the art, and in one non-limiting embodiment the terms are defined to be within 10%, preferably within 5%, more preferably within 1%, and most preferably within 0.5%.

The use of the word "a" or "an" when used in conjunction with the term "comprising" in the claims and/or the specification may mean "one," but it is also consistent with the meaning of "one or more," "at least one," and "one or more than one."

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The compositions and methods for their use can "comprise," "consist essentially of," or "consist of" any of the ingredients or steps disclosed throughout the specification. With respect to the transitional phase "consisting essentially of," in one non-limiting aspect, a basic and novel characteristic of the compositions and methods disclosed in this specification includes a UV-curable coating composition that confers abrasion resistance to an optical article.

Other objects, features and advantages of the present invention will become apparent from the following detailed description. It should be understood, however, that the detailed description and the examples, while indicating specific embodiments of the invention, are given by way of illustration only. This summary of the invention does not list all necessary characteristics, and therefore, subcombinations of these characteristics may also constitute an aspect of the invention.

### BRIEF DESCRIPTION OF THE FIGURES

**FIG.** 1 is a graph depicting the relationship between abrasion resistance and nanoparticle/acrylate dispersion content of Examples 8 through 12.
**FIG. 2** is a graph depicting the relationship between abrasion resistance and nanoparticle/acrylate dispersion content of Examples 13 through 19.

### DETAILED DESCRIPTION

Various features and advantageous details are explained more fully with reference to the non-limiting embodiments that are illustrated in the accompanying drawings and detailed in the following description. It should be understood, however, that the detailed description and the specific examples, while indicating embodiments, are given by way of illustration only, and not by way of limitation. Various substitutions, modifications, additions, and/or rearrangements will be apparent to those of ordinary skill in the art from this disclosure.

In the following description, numerous specific details are provided to provide a thorough understanding of the disclosed embodiments. One of ordinary skill in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

The present disclosure relates to UV-curable, abrasion-resistant coating compositions for ophthalmic articles. Commercial dispersions of functionalized SiO₂ in different acrylate monomers are available that contain up to 50% by weight SiO₂. The polymerizable acrylate monomers and the strength-enhancing silica particles can be combined with reactive monomers that bind to both the silica particles and acrylate monomers. The combination of silica/arcylate dispersions and reactive monomers can be used to provide silica-reinforced, solvent-free UV-curable compositions. The resulting hard coatings rival the abrasion resistance of thermally cured, solvent-borne sol-gel coatings.

The abrasion-resistant coating compositions disclosed herein include at least one non-hydrolyzed epoxy(alkoxy)silane, at least one dispersion of inorganic nanoparticles, at least one acrylate or silane binder, and at least one free radical photoinitiator, cationic photoinitiator, or a combination thereof.

By utilizing epoxy(alkoxy)silanes in the unhydrolyzed state, changes to viscosity can be minimized or eliminated, thereby providing coatings having improved stability and near-constant viscosity. When using unhydrolyzed epoxy(alkoxy)silanes, photoinitiators can simultaneously initiate the ring opening of the epoxy groups and catalyze the hydrolysis and condensation of the alkoxy groups with the strong Bronsted acid generated during photolysis. The condensation occurs between the alkoxy groups of the silane molecules and with the abundant silica particles, which provides a reinforcing effect and improves abrasion resistance. Acrylate content can be cured concomitantly with the epoxysilane, providing final cured compositions whose abrasion resistance is comparable to thermally cured sol-gel coatings. The coatings disclosed herein exhibit low viscosity, and can be applied by a variety of methods such as spin coating, inkjet coating, etc.

The non-hydrolyzed epoxy(alkoxy)silane has at least one hydrolyzable group directly linked to the silicon atom and at least one epoxy group. The epoxy group is a cyclic ether functional group, and is preferably an epoxide (oxirane). As used herein, the term "epoxide" represents a subclass of epoxy compounds containing a saturated three-membered cyclic ether. The non-hydrolyzed epoxy(alkoxy)silane is preferably γ-glycidoxypropyl trimethoxysilane. The epoxysilane preferably has from 2 to 6, more preferably 2 or 3 hydrolyzable functional groups directly linked to the silicon atom that lead to an OH group upon hydrolysis. Examples of hydrolyzable functional groups include but are not limited to alkoxy groups -O-R¹, wherein R¹ prefereably represents a linear or branched alkyl or alkoxyalkyl group, preferably a C₁-C₄ alkyl group, acyloxy groups -O-C(O)R², wherein R² preferably represents an alkyl group, preferably a C₁-C₆ alkyl group, and more preferably a methyl or ethyl group, halogen groups such as C1 and Br, amino groups optionally substituted with one or two functional groups such as an alkyl or silane group, for example the NHSiMe₃ group, alkylenoxy groups such as the isopropenoxy group, and the hydroxyl group -OH. Examples of such epoxysilanes include λ-glycidoxypropyl triethoxysilane, λ-glycidoxypropyl trimethoxysilane (GLYMO), 2-(3,4-epoxycyclohexyl) ethyltrimethoxysilane, 3-glycidoxypropyl methyldiethoxysilane, 2-(3,4-epoxycyclohexyl) ethyltriethoxysilane. Among those silanes, γ-glycidoxypropyltrimethoxysilane (GLYMO) is preferred. The epoxy(alkoxy)silane is preferably provided and used in a non-hydrolyzed state.

When acrylate binder molecules are used in combination with the epoxy(alkoxy)silane, the coating composition may further comprise at least one photoinitiator, preferably from 0.5 to 20 parts by weight, relative to the coating composition. Such photoinitiators can be selected for example from haloalkylated aromatic ketones such as chloromethylbenzophenones; some benzoin ethers such as ethyl benzoin ether and isopropyl benzoin ether; dialkoxyacetophenones such as diethoxyacetophenone and α,α-dimethoxy-α-phenylacetophenone; hydroxyketones such as (1-[4-(2-hydroxyethoxy)-phenyl]-2-hydroxy-2-methyl-1-propan-1-one) (Irgacure® 2959 from CIBA), 1-hydroxy-cyclohexyl-phenyl-ketone (Irgacure® 184 from CIBA) and 2-hydroxy-2-methyl-1-phenylpropan-1-one (such as Darocur® 1173 sold by CIBA); alpha amino ketones, particularly those containing a benzoyl moiety, otherwise called alpha-amino acetophenones, for example 2-methyl 1-[4-phenyl]-2-morpholinopropan-1-one (Irgacure® 907 from CIBA), (2-benzyl-2-dimethyl amino-1-5 (4-morpholinophenyl)-butan-1-one (Irgacure® 369 from CIBA); monoacyl and bisacyl phosphine oxides and sulphides, such as phenylbis(2,4,6-trimethylbenzoyl)-phosphine oxide (Irgacure® 819 sold by CIBA); triacyl phosphine oxides; liquid photoinitiator blends (such as GENOCURE LTM sold by Rahn Usa Corp.) and mixtures thereof. Similarly, polyfunctional epoxy monomers may be used in combination with at least one cationic photoinitiator, which may be selected from a triarylsulfonium salt, a diaryliodonium salt or mixtures thereof, preferably a triarylsulfonium salt. The triarylsulfonium or diaryliodonium salts used in the present invention advantageously have counter-ions of low nucleophilicity and are preferably selected from triarylsulfonium hexafluoroantimonate, triarylsulfonium hexafluorophosphate, diaryliodonium hexafluoroantimonate and diaryliodonium hexafluorophosphate salts. Triarylsulfonium hexafluoroantimonate is available for example from Dow Chemical Company under the trademark CYRACURE™ UVI-6976 (50% by weight in propylene carbonate). Triarylsulfonium hexafluorophosphate is available for example from Dow Chemical Company under the trademark CYRACURE™ UVI-6992 (50% by weight in propylene carbonate). Diaryliodonium hexafluorophosphate is available for example from Ciba Specialty Chemicals, under the reference IRG-250, or from Aldrich under the reference 548014. Diaryliodonium hexafluoroantimonate is available for example from Sartomer Company under the reference SarCat CD 1012.

In some embodiments, the coating composition comprises at least one surfactant. The surfactant aids in wetting of the substrate, resulting in satisfactory cosmetics of the final coating. The surfactant can include for example poly(alkylene glycol)-modified polydimethylsiloxanes or polyheptamethylsiloxanes, or fluorocarbon-modified polysiloxanes. Preferred surfactants are fluorinated surfactant such as Novec® FC-4434 from 3M (non ionic surfactant comprising fluoroaliphatic polymeric esters), UnidyneTM NS-9013, and EFKA® 3034 from CIBA (fluorocarbon-modified polysiloxane).

In some embodiments, the optical substrate is selected from the group consisting of thermoplastic, thermoset, and mineral optical substrates. Preferable optical substrates include, but are not limited to polycarbonate, poly(thio)urethanes, acrylics, and diethylene glycol bis(allyl carbonate) substrates. The substrate of the optical article, coated on at least one main face with a coating, may be a mineral or an organic glass, for instance an organic glass made from a thermoplastic or thermosetting plastic, generally chosen from transparent materials of ophthalmic grade used in the ophthalmic industry. Preferred classes of substrate materials are polycarbonates, polyamides, polyimides, polysulfones, copolymers of polyethylene therephthalate and polycarbonate, polyolefins such as polynorbornenes, resins resulting from polymerization or (co)polymerization of alkylene glycol bis allyl carbonates such as polymers and copolymers of diethylene glycol bis(allylcarbonate) (marketed, for instance, under the trade name CR-39® by the PPG Industries company), polycarbonates such as those derived from bisphenol A, (meth)acrylic or thio(meth)acrylic polymers and copolymers such as polymethyl methacrylate (PMMA), urethane and thiourethane polymers and copolymers, epoxy polymers and copolymers, episulfide polymers and copolymers.

Prior to depositing a coating, the surface of the substrate may be submitted to a physical or chemical surface activating and cleaning treatment, so as to improve the adhesion of the layer to be deposited, such as disclosed in WO 2013/013929, e.g., paragraphs [0066] through [0072] and [0090].

In the present invention, the photocurable coating composition comprises 25 to 65 parts by weight of the non-hydrolyzed epoxy(alkoxy)silane. The at least one dispersion of inorganic nanoparticles and at least one acrylate comprises 20 to 60 parts by weight of the composition, in some embodiments. The inorganic nanoparticles are preferably metal-oxide nanoparticles, and more preferably silica nanoparticles.

In the present invention, the photocurable coating composition comprises 5 to 20 parts by weight of the acrylate binder or silane binder. The acrylate binder or silane binder may be selected from the group consisting of 1,4-butanediol diacrylate, 1,6 hexanediol diacrylate, trimethylolpropane triacrylate, ethoxylated trimethylolpropane triacrylate, propoxylated glycerol triacrylate, alkoxylated pentaerythritol tetraacrylate, vinyltrimethoxysilane, or a combination thereof. In some aspects, the photoinitiator is present in an amount ranging from 0.5 to 20 parts by weight. The photoinitiator may be selected from the group consisting of a triarylsulfonium hexafluoroantimonate salt, a triarylsulfonium hexafluorophosphate salt, 2-hydroxy-2-methyl-1-phenyl-1-propanone, phenylbis(2,4,6-trimethylbenzoyl)-phosphine oxide, or a combination thereof. In some embodiments, the composition further comprises 0.05 to 1 part by weight of a surfactant. The coating composition may be provided with or without a solvent. In embodiments where a coating composition is provided in combination with a solvent, the coating composition may be dried to remove at least a part of the solvent prior to curing.

In some aspects, the coating is deposited on the optical substrate of the optical article and is preferably in direct contact with said substrate. The deposition is carried out using methods known in the art, preferably by spin-coating, spray-coating, 3D printing, roll-to-roll coating, or inkjet printing the UV-curable composition.

As used herein, a coating that is "on" a substrate/coating or which has been deposited "onto" a substrate/coating is defined as a coating that (i) is positioned above the substrate/coating, (ii) is not necessarily in contact with the substrate/coating, that is to say one or more intermediate coating(s) may be interleaved between the substrate/coating and the relevant coating (however, it does preferably contact said substrate/coating), and (iii) does not necessarily completely cover the substrate/coating. When a first coating is said to be located under a second coating, it should be understood that the second coating is more distant from the substrate than the first coating.

### Evaluation of Cured Coating Abrasion Resistance

A sand Bayer abrasion resistance test was performed on each coated lens, in accordance with the ASTM F735 standard. The sand Bayer Test consists of comparing the abrasion generated on a test specimen against an ISO Reference Lens (uncoated CR-39 lens). Both lenses are mounted in a special Bayer test lens holder that allows the curvature of the lenses to protrude above the bottom of the tray. After the specimens are covered with sand (abrasive media), the tray is reciprocated in a back-and-forth (to-and-fro) motion a distance of 4 inches, at 150 cycles per minute for 4 minutes.

After the abrasion cycle, the abrasion of the two lenses are compared. The degree of abrasion is measured by the amount of change in haze as measured by a hazemeter. A ratio that compares the increase in haze of the test lens to that of the ISO Reference Lens provides a measure of how much more abrasion resistant the test lens is compared to an uncoated lens.

### Simulated Ageing

Some examples were subjected to the Q-sun test to simulate the effects of sunlight exposure upon the coated optical article. The Q-sun test consists of placing the coated optical articles in a Q-sun® Xe-3 xenon chamber, which reproduces full spectrum sunlight, at a relative humidity of 20% (± 5%) and at a temperature of 23° C (± 5° C), and exposing their coated side to the light for 40 or 80 hours.

### N×10 Blows Test

The N×10 Blows Test was used to evaluate the adhesion of a subsequent anti-reflection coating to the UV hard coating. The test is performed in accordance with ISTM 02-011. Briefly, a sample to be tested is placed in a clamp and covered with a selvyt cloth impregnated with isopropyl alcohol. An eraser positioned on a holder moving in translation is put in contact with the cloth. The eraser is pressed down (force = 60 Newtons) on the selvyt cloth placed in contact with the lens. The test consists in the determination, for each sample, of the number of cycles required to cause a defect to appear in the subsequent anti-reflection coating.

### RC02 Test

The RC02 Test was used to evaluate corrosion resistance of a subsequent anti-reflection coating to the UV coating. The test is performed in accordance with ISTM 02-020. Briefly, lenses are half-immersed in a salt water solution of 200 g/l at 50°C for a period of 20 minutes. The convex and concave sides of the lens are visually inspected for variation in the immersed part of the lens of the color, the level of reflection and the presence of possible attacks. An attack defect is characterized by a reflection level higher or equal of those of uncoated substrate, coming from partial or total baring of the anti-reflection coating stack. Attack defects located at less than 2 mm from the edge are not taken account in the notation, exception for edged lenses after antireflection coating for which all the surface is analyzed. Attack defects having area less than 1 mm² are not taken account.

### EXAMPLES

### Examples 1-4:

A series of solvent-free UV-curable coating compositions were prepared. Typical solvent-free UV-cured hard coatings devoid of SiO₂ have sand Bayer abrasion values ranging from less than 1.0 to about 2.0. Examples 1 and 2 in Table 1 below demonstrate that sand Bayer values greater than 2.0 can be achieved using high SiO₂ loading dispersed in different acrylate monomers (component amounts in Tables below reported in wt. percentage). In Examples 3 and 4, the proportion of unhydrolyzed epoxy(alkoxy)silane to silica acrylate dispersion was increased over the proportions in Examples 1 and 2. Examples 3 and 4 show that abrasion resistance can be enhanced by increasing the proportion of unhydrolyzed epoxy(alkoxy)silane to silica acrylate dispersion. Sand Bayer values greater than 3.0 were achieved by adjusting this ratio.

**Table 1: Examples 1-4, Compositions and Properties**

| | **Example 1** | **Example 2** | **Example 3** | **Example 4** |
|---|---|---|---|---|
| **Component** | | | | |
| γ-glycidoxypropyl trimethoxysilane | 34.89 | 35.13 | 48.29 | 48.29 |
| Vinyltrimethoxysilane | 8.72 | 8.78 | 9.66 | --- |
| 1,4-butanediol diacrylate | --- | --- | --- | 9.66 |
| 50% SiO₂ dispersed in trimethylol propane triacrylate | 52.33 | --- | --- | --- |
| 50% SiO₂ dispersed in ethoxylated pentaerythritol tetraacrylate | --- | 52.70 | 38.33 | 38.63 |
| Triarylsulfonium hexafluoroantimonate salts, mixed | 2.09 | 1.58 | 1.81 | 1.81 |
| Triarylsulfonium hexafluorophosphate salts, mixed | 0.70 | 0.527 | 0.604 | 0.604 |
| 2-hydoxy-2-methyl-1-phenyl-1-propanone (photoinitiator) | 0.872 | 0.824 | 0.657 | 0.657 |
| phenylbis(2,4,6-tri methyl benzoyl)-phosphine oxide (photo initiator) | 0.218 | 0.220 | 0.164 | 0.164 |
| Surfactant (mixture of fluoro-surfactants) | 0.174 | 0.176 | 0.193 | 0.193 |
| **Total** | **100.0** | **100.0** | **100.0** | **100.0** |

| **Performance** | | | | |
|---|---|---|---|---|
| Sand Bayer | 2.3 | 2.5 | 3.3 | 3.4 |
| ASTM Haze | 0.88 | 0.25 | 0.19 | 0.20 |
| Trans. AVL | 91.1 | 91.9 | 92.3 | 92.3 |

### Examples 5-7

Abrasion resistance, haze, and transmittance were examined after the coatings were cured with UV only and UV and infrared (IR) irradiation. Example 5 includes a pre-hydrolyzed epoxy(alkoxy)silane, UV photoinitiators, and the condensation catalyst aluminum acetylacetonate. Examples 6 and 7 include unhydrolyzed epoxy(alkoxy)silane, cationic photoinitiators, and no metal catalyst. Despite the additional heat provided by IR treatment, Example 5, having the pre-hydrolyzed epoxy(alkoxy)silane, performs significantly worse in abrasion resistance than either UV-only Example 6 or Example 7. Examples 6 and 7 do not include a metal catalyst and rely on cationic photoinitiators to open the epoxy(alkoxy)silane epoxy ring and catalyze hydrolysis and condensation of the alkoxy groups.

**Table 2: Examples 5-7, Compositions and Properties**

| | **Example 5** | **Example 6** | **Example 7** |
|---|---|---|---|
| **Component** | | | |
| Hydrolyzed epoxy(alkoxy)silane (Hydrolyzed glycidoxypropyltrimethoxysilane) | 47.87 | --- | --- |
| Non-hydrolyzed epoxy(alkoxy)silane (γ-glycidoxypropyl trimethoxysilane) | --- | 48.05 | 48.05 |
| Nanoparticle/acrylate dispersion (50% SiO₂ dispersed in ethoxylated pentaerythritol tetraacrylate) | 38.30 | 38.44 | 38.44 |
| Silane binder (vinyltrimethoxysilane) | 9.57 | 9.61 | --- |
| Acrylate binder (1,4 - butanediol diacrylate) | --- | --- | 9.61 |
| Catalyst (aluminum acetylacetonate) | 0.48 | --- | --- |
| Photoinitiator (triarylsulfonium hexafluoroantimonate salts, mixed) | 2.15 | 2.15 | 2.15 |
| Photoinitiator (triarylsulfonium hexafluorophosphate salts, mixed) | 0.718 | 0.718 | 0.718 |
| Photoinitiator (2-hydroxy-2-methyl-1-phenyl-1-propanone) | 0.613 | 0.654 | 0.656 |
| Photoinitiator (phenylbis(2,4,6-trimethylbenzoyl)-phosphine oxide) | 0.153 | 0.163 | 0.164 |
| Surfactant (mixture of fluoro-surfactants) | 0.144 | 0.192 | 0.192 |
| Total | 100.00 | 100.00 | 100.00 |
| Viscosity (25 °C) | 8.1 cps | 11.0 cps | 14.1 cps |
| Specific Gravity | 1.196 | 1.194 | 1.200 |
| Surface Tension | 30.4 | 27.5 | 28.9 |

| **Performance** (average of 3 lenses) | | | |
|---|---|---|---|
| Sand Bayer (UV only) | 2.3 | 3.4 | 3.5 |
| ASTM Haze (UV only) | 0.18 | 0.28 | 0.23 |
| Trans. AVL (UV only) | 92.50 | 92.50 | 92.50 |
| Q-Sun adhesion, 0 hrs | Pass | Pass | Pass |
| Q-Sun adhesion, 40 hrs | Pass | Pass | Pass |
| Q-Sun adhesion, 80 hrs | Pass | Pass | Pass |
| Coating Thickness (µm) | 3.95 | 3.98 | 4.38 |
| Sand Bayer (UV + IR) | 2.8 | 3.5 | 3.6 |
| ASTM Haze (UV + IR) | 0.20 | 0.23 | 0.23 |
| Transmission AVL (UV + IR) | 92.50 | 92.50 | 92.50 |

### Examples 8-12

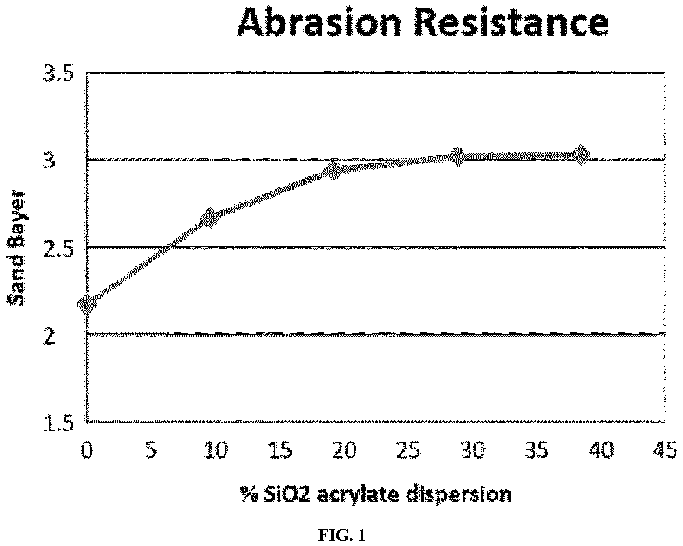

In Examples 8 through 12 various nanoparticle/acrylate dispersion amounts were examined. As the dispersion amount increases from Example 12 through Example 8, the abrasion resistance increases until a maximum abrasion resistance of 3.0 is reached for the two Examples having the highest nanoparticle/acrylate dispersion content (Examples 8 and 9). The relationship between abrasion resistance and nanoparticle/acrylate dispersion content is depicted in **FIG. 1****.**

**Table 3: Examples 8-12, Compositions and Properties**

| **Component** | **Example 8** | **Example 9** | **Example 10** | **Example 11** | **Example 12** |
|---|---|---|---|---|---|
| Non-hydrolyzed epoxy(alkoxy)silane (γ-glycidoxypropyl trimethoxysilane) | 48.05 | 48.05 | 48.05 | 48.05 | 48.05 |
| Nanoparticle/acrylate dispersion (50% SiO₂ in ethoxylated pentaerythritol tetraacrylate) | 38.44 | 28.83 | 19.22 | 9.61 | --- |
| Acrylate binder (1,4 butanediol diacrylate) | 9.61 | 9.61 | 9.61 | 9.61 | 9.61 |
| Acrylate binder (ethoxylated pentaerythritol tetraacrylate) | --- | 9.61 | 19.22 | 28.83 | 38.44 |
| Photoinitiator (triarylsulfonium hexafluoroantimonate salts, mixed) | 2.16 | 2.16 | 2.16 | 2.16 | 2.16 |
| Photoinitiator (triarylsulfonium hexafluorophosphate salts, mixed) | 0.720 | 0.720 | 0.720 | 0.720 | 0.720 |
| Photoinitiator (2-hydroxy-2-methyl-1-phenyl-1-propanone) | 0.654 | 0.654 | 0.654 | 0.654 | 0.654 |
| Photoinitiator (phenylbis(2,4,6-trimethylbenzoyl)-phosphine oxide) | 0.163 | 0.163 | 0.163 | 0.163 | 0.163 |
| Surfactant (mixture of fluoro-surfactants) | 0.192 | 0.192 | 0.192 | 0.192 | 0.192 |
| **Total** | 100.00 | 100.00 | 100.00 | 100.00 | 100.00 |

| **Performance** | | | | | |
|---|---|---|---|---|---|
| Sand Bayer | 3.0 | 3.0 | 2.9 | 2.7 | 2.2 |
| HSW | 3 | 3 | 5 | 5 | 3 |
| Haze | 0.21 | 0.14 | 0.14 | 0.15 | 0.15 |
| Transmission | 92.2 | 92.2 | 92.2 | 92.1 | 92.1 |

### Examples 13-19

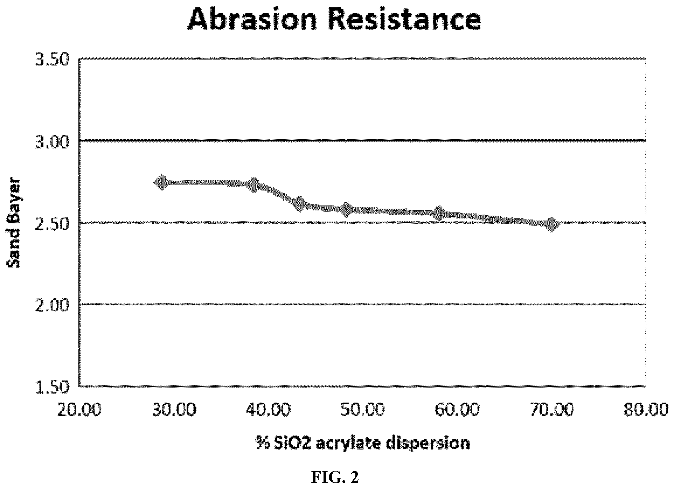

Examples 13-19 were prepared with increasing amounts of the nanoparticle/acrylate dispersion. There was a concomitant decrease in the proportion of non-hydrolyzed epoxy(alkoxy)silane across Examples 13-19. Increasing the proportion of nanoparticle/acrylate dispersion resulted in a slight decrease in abrasion resistance (FIG. 2) and increased brittleness. Example 19 included the highest nanoparticle/acrylate dispersion amount (80%). The high nanoparticle/acrylate dispersion content caused the coating to craze during UV cure. Both epoxy(alkoxy)silane also plays a role in abrasion resistance and the optimum concentration of the Si02 acrylate dispersion depends on the co-monomers chosen.

**Table 4-1: Examples 13-16, Compositions and Properties**

| **Component** | **Example 13** | **Example 14** | **Example 15** | **Example 16** |
|---|---|---|---|---|
| Non-hydrolyzed epoxy(alkoxy)silane (γ-glycidoxypropyl trimethoxysilane) | 52.70 | 48.02 | 43.34 | 38.61 |
| Nanoparticle/acrylate dispersion (50% SiO₂ in ethoxylated pentaerythritol tetraacrylate) | 28.75 | 38.44 | 43.34 | 48.26 |
| Acrylate binder (1,4 butanediol diacrylate) | 14.37 | 9.63 | 9.63 | 9.65 |
| Photoinitiator (triarylsulfonium hexafluoroantimonate salts, mixed) | 2.372 | 2.165 | 1.950 | 1.738 |
| Photoinitiator (triarylsulfonium hexafluorophosphate salts, mixed) | 0.791 | 0.722 | 0.650 | 0.579 |
| Photoinitiator (2-hydroxy-2-methyl-1-phenyl-1-propanone) | 0.657 | 0.659 | 0.715 | 0.772 |
| Photoinitiator (phenylbis(2,4,6-trimethylbenzoyl)-phosphine oxide) | 0.164 | 0.165 | 0.179 | 0.193 |
| Surfactant (mixture of fluoro-surfactants) | 0.192 | 0.192 | 0.193 | 0.193 |
| **Total** | 100.00 | 100.00 | 100.00 | 100.00 |

| **Performance** (average of 3 lenses) | | | | |
|---|---|---|---|---|
| Sand Bayer (UV only) | 2.8 | 2.7 | 2.6 | 2.6 |
| ASTM Haze | 0.15 | 0.24 | 0.15 | 0.14 |
| Trans. AVL | 92.15 | 92.10 | 92.15 | 92.10 |

**Table 4-2: Examples 17-19, Compositions and Properties**

| | **Example 17** | **Example 18** | **Example 19** |
|---|---|---|---|
| **Component** | | | |
| Non-hydrolyzed epoxy(alkoxy)silane (γ-glycidoxypropyl trimethoxysilane) | 33.88 | 26.00 | 16.00 |
| Acrylate binder (1,4 butanediol diacrylate) | 4.84 | --- | --- |
| Nanoparticle/acrylate dispersion (50% SiO₂ in ethoxylated pentaerythritol tetraacrylate) | 58.08 | 70.00 | 80.00 |
| Photoinitiator (triarylsulfonium hexafluoroantimonate salts, mixed) | 1.525 | 1.200 | 0.960 |
| Photoinitiator (triarylsulfonium hexafluorophosphate salts, mixed) | 0.508 | 0.400 | 0.720 |
| Photoinitiator (2-hydroxy-2-methyl-1-phenyl-1-propanone) | 0.774 | 1.760 | 2.272 |
| Photoinitiator (phenylbis(2,4,6-trimethylbenzoyl)-phosphine oxide) | 0.194 | 0.440 | 0.568 |
| Surfactant (mixture of fluoro-surfactants) | 0.194 | 0.200 | 0.200 |
| Total | 100.00 | 100.00 | 100.00 |

| **Performance** (average of 3 lenses) | | | |
|---|---|---|---|
| Sand Bayer (UV only) | 2.6 | 2.5 | Crazed |
| ASTM Haze | 0.19 | 0.24 | Crazed |
| Trans. AVL | 92.10 | 92.00 | Crazed |

Based on the findings above, optimum performance with respect to abrasion resistance is obtained using a range of unhydrolyzed epoxy(alkoxy)silane from 25% to 65% of the total solids together with an acrylated silica dispersion ranging from 20% to 60% of the total solids and a range from 5% to 20% of a reactive monomer together with a mixture of cationic photoinitiators to achieve optimum through cure and surface cure of the epoxy(alkoxy)silane and a mixture of free radical photoinitiators to achieve optimum through cure and surface cure of the acrylates.

**Table 5: Component Ranges Providing Enhanced Abrasion Resistance**

| **Component** | **Component Type** | **Mininum (wt. %)** | **Maximum (wt. %)** |
|---|---|---|---|
| γ-Glycidoxypropyl trimethoxysilane | Non-hydrolyzed epoxy(alkoxy)silane | 25 | 65 |
| 50% SiO₂ dispersed in ethoxylated pentaerythritol tetraacrylate | Dispersion of inorganic nanoparticles and at least one acrylate | 10 | 70 |
| 1,4 butanediol diacrylate | Silane binder | 5 | 20 |
| Triarylsulfonium hexafluoroantimonate salts, mixed | Photoinitiator | 0.4 | 6 |
| Triarylsulfonium hexafluorophosphate salts, mixed | Photoinitiator | 0.4 | 6 |
| 2-hydroxy-2-methyl-1-phenyl-1-propanone | Photoinitiator | 0.30 | 3.5 |
| phenylbis(2,4,6-trimethylbenzoyl)-phosphine oxide | Photoinitiator | 0.30 | 3.5 |
| Mixture of fluoro-surfactants | Surfactant | 0 | 1.0 |

### Examples 20 and 21

Examples 20 and 21 in Table 6 below were prepared using the component ranges (from Table 5) that were determined to provide enhanced abrasion resistance.

**Table 6: Examples 20 and 21, Compositions and Properties**

| | **Example 20** | **Example 21** |
|---|---|---|
| **Component** | % | % |
| Non-hydrolyzed epoxy(alkoxy)silane (γ-glycidoxypropyltrimethoxysi lane) | 52.71 | 48.05 |
| Acrylate binder (1,4 butanediol diacrylate) | 14.37 | 9.61 |
| Nanoparticle/acrylate dispersion (50% SiO₂ in ethoxylated pentaerythritol tetraacrylate) | 28.75 | 38.44 |
| Photoinitiator (triarylsulfonium hexafluoroantimonate salts, mixed) | 2.37 | 2.16 |
| Photoinitiator (triarylsulfonium hexafluorophosphate salts, mixed) | 0.79 | 0.72 |
| Photoinitiator (2-hydroxy-2-methyl-1-phenyl-1-propanone) | 0.66 | 0.65 |
| Photoinitiator (phenylbis(2,4,6-trimethylbenzoyl)-phosphine oxide) | 0.16 | 0.16 |
| Surfactant (mixture of fluoro-surfactants) | 0.19 | 0.19 |
| **Total** | 100.0 | 100.0 |

Table 7 below shows the performance of example 20 compared to that of a thermally cured production sol-gel coating. The compositions disclosed herein represent the first UV-curable coatings that display abrasion-resistant performance comparable conventional thermally-cured sol coatings.

**Table 7: 100% Solids UV Hard Coating vs. Solvent-borne Sol-gel Thermally Cured Coating**

| | **Example 20 / UV Hard Coat** | | | | **Production Sol-Gel Hard Coating** | | | |
|---|---|---|---|---|---|---|---|---|
| **Lens #** | **1** | **2** | **3** | **Ave.** | **1** | **2** | **3** | **Ave.** |
| Sand Bayer | 2.8 | 2.9 | 2.9 | 2.9 | 3.6 | 3.6 | 3.7 | 3.6 |
| ASTM Haze | 0.15 | 0.16 | 0.15 | 0.15 | 0.09 | 0.09 | 0.10 | 0.09 |
| Transmission | 92.0 | 92.0 | 92.0 | 92.0 | 92.7 | 92.7 | 92.7 | 92.7 |
| Hand Steel Wool | 3 | 3 | 3 | 3 | 1 | 1 | 1 | 1 |
| Thickness | 3.95 | 3.95 | 3.86 | 3.92 | 3.03 | 2.95 | 3.00 | 2.99 |
| 0 hr Q-Sun adhesion | Pass | Pass | Pass | Pass | Pass | Pass | Pass | Pass |
| 40hr Q-Sun adhesion | Pass | Pass | Pass | Pass | Pass | Pass | Pass | Pass |
| 80hr Q-Sun adhesion | Pass | Pass | Pass | Pass | Pass | Pass | Pass | Pass |

| | **Crizal FUV AR Coated on Example 20** | | | | **Crizal FUV AR Coated on Sol-Gel Hard Coat** | | | |
|---|---|---|---|---|---|---|---|---|
| Sand Bayer | 4.8 | 5.1 | 5.3 | 5.1 | 5.2 | 5.5 | 5.4 | 5.4 |
| ASTM Haze | 0.13 | 0.09 | 0.46* | 0.23 | 0.06 | 0.06 | 0.05 | 0.06 |
| Transmission AVL | 97.7 | 97.8 | 97.4 | 97.6 | 98.2 | 98.2 | 98.2 | 98.2 |
| Hand Steel Wool | 3 | 3 | 3 | 3 | 3 | 3 | 3 | 3 |
| Nx10Blows | N>12 | N>12 | N>12 | N>12 | N>12 | N>12 | N>12 | N>12 |
| RCO2 | 1/2 | 1/2 | 1/2 | 1/2 | 1/2 | 1/2 | 1/2 | 1/2 |

| | | | | | | | | |
|---|---|---|---|---|---|---|---|---|
| * AR = anti-reflective | | | | | | | | |

In summary, the disclosure provides coatings for plastic (organic glass) substrates, and ophthalmic lenses, in particular. As shown by the data in Table 7, the present coating compositions exhibit abrasion resistance comparable to conventional thermally-cured sol-gel coatings. The compositions may be applied by a variety of means, including spin coating and inkjet coating.

The claims are not to be interpreted as including means-plus- or step-plus-function limitations, unless such a limitation is explicitly recited in a given claim using the phrase(s) "means for" or "step for," respectively.

## Claims

1. A photocurable coating composition comprising a mixture of:
a) 25 to 65 wt% of the total solids of at least one non-hydrolyzed epoxy(alkoxy)silane;
b) 20 to 60 wt% of the total solids of at least one dispersion of inorganic nanoparticles and at least one acrylate;
c) 5 to 20 wt% of at least one acrylate binder or silane binder; and
d) at least one free radical photoinitiator, cationic photoinitiator, or a combination thereof;
wherein the composition does not comprise hydrolyzed epoxy(alkoxy)silane.

2. The composition of claim 1, wherein the inorganic nanoparticles are silica nanoparticles.

3. The composition of claim 1 or 2, wherein the acrylate binder or silane binder is selected from the group consisting of 1,4-butanediol diacrylate, 1,6 hexanediol diacrylate, trimethylolpropane triacrylate, ethoxylated trimethylolpropane triacrylate, propoxylated glycerol triacrylate, alkoxylated pentaerythritol tetraacrylate, vinyltrimethoxysilane, or a combination thereof.

4. The composition of any one of claims 1 to 3, wherein the composition comprises 0.5 to 20 parts by weight of photoinitiator.

5. The composition of claim 4, wherein the photoinitiator is selected from the group consisting of a triarylsulfonium hexafluoroantimonate salt, a triarylsulfonium hexafluorophosphate salt, 2-hydroxy-2-methyl-1-phenyl-1-propanone, phenylbis(2,4,6-trimethylbenzoyl)-phosphine oxide, or a combination thereof.

6. The composition of any one of claims 1 to 5, wherein the composition further comprises 0.05 to 1 part by weight of a surfactant.

7. The composition of any one of claims 1 to 6, wherein the composition further comprises a solvent.

8. A method for manufacturing an abrasion-resistant, hard-coated substrate, the method comprising coating an optical substrate with a photocurable coating composition comprising a mixture of:
a) 25 to 65 wt% of the total solids of at least one non-hydrolyzed epoxy(alkoxy)silane;
b) 20 to 60 wt% of the total solids of at least one dispersion of inorganic nanoparticles and at least one acrylate;
c) 5 to 20 wt% of at least one acrylate binder or silane binder; and
d) at least one free radical photoinitiator, cationic photoinitiator, or a combination thereof; and
curing the photocurable composition coating with UV irradiation;
wherein the method does not comprise a hydrolysis step prior to curing.

9. The method of claim 8, wherein the optical substrate is selected from the group consisting of thermoplastic, thermoset, and mineral optical substrates.

10. The method of claim 9, wherein the optical substrate is selected from the group consisting of polycarbonate, poly(thio)urethanes, acrylics, and diethylene glycol bis(allyl carbonate).

11. The method of any one of claims 8 to 10, further comprising the step of drying the photocurable composition coating prior to curing.

12. An optical article having at least one main surface comprising a coating obtained by depositing a photocurable coating composition comprising a mixture of:
a) 25 to 65 wt% of the total solids of at least one non-hydrolyzed epoxy(alkoxy)silane;
b) 20 to 60 wt% of the total solids of at least one dispersion of inorganic nanoparticles and at least one acrylate;
c) 5 to 20 wt% of at least one acrylate binder or silane binder; and
d) at least one free radical photoinitiator, cationic photoinitiator, or a combination thereof; and
curing the photocurable composition coating to produce an optical article having a coating which exhibits a relative abrasion resistance of at least 2.5, when tested according to ASTM F735.

## Patentansprüche

1. Photohärtbare Beschichtungszusammensetzung, umfassend eine Mischung von:
a) 25 bis 65 Gew.-%, bezogen auf die Gesamtfeststoffe, mindestens eines nicht hydrolysierten Epoxy(alkoxy) silans;
b) 20 bis 60 Gew.-%, bezogen auf die Gesamtfeststoffe, mindestens einer Dispersion von anorganischen Nanopartikeln und mindestens einem Acrylat;
c) 5 bis 20 Gew.-% mindestens eines Acrylat-Bindemittels oder Silan-Bindemittels und
d) mindestens einen radikalischen Photoinitiator, einen kationischen Photoinitiator oder eine Kombination davon;
wobei die Zusammensetzung kein hydrolysiertes Epoxy(alkoxy)silan umfasst.

2. Zusammensetzung nach Anspruch 1, wobei es sich bei den anorganischen Nanopartikeln um Siliciumdioxid-Nanopartikel handelt.

3. Zusammensetzung nach Anspruch 1 oder 2, wobei das Acrylat-Bindemittel oder Silan-Bindemittel aus der Gruppe bestehend aus 1,4-Butandioldiacrylat, 1,6-Hexandioldiacrylat, Trimethylolpropantriacrylat, ethoxyliertem Trimethylolpropantriacrylat, propoxyliertem Glycerintriacrylat, alkoxyliertem Pentaerythritoltetraacrylat, Vinyltrimethoxysilan oder einer Kombination davon ausgewählt ist.

4. Zusammensetzung nach einem der Ansprüche 1 bis 3, wobei die Zusammensetzung 0,5 bis 20 Gewichtsteile Photoinitiator umfasst.

5. Zusammensetzung nach Anspruch 4, wobei der Photoinitiator aus der Gruppe bestehend aus einem Triarylsulfoniumhexafluoroantimonatsalz, einem Triarylsulfoniumhexafluorophosphatsalz, 2-Hydroxy-2-Methyl-1-phenyl-1-propanon, Phenylbis(2,4,6-trimethylbenzoyl)phosphinoxid oder einer Kombination davon ausgewählt ist.

6. Zusammensetzung nach einem der Ansprüche 1 bis 5, wobei die Zusammensetzung ferner 0,05 bis 1 Gewichtsteil eines Tensids umfasst.

7. Zusammensetzung nach einem der Ansprüche 1 bis 6, wobei die Zusammensetzung ferner ein Lösungsmittel umfasst.

8. Verfahren zur Herstellung eines abriebfesten hartbeschichteten Substrats, bei dem man ein optisches Substrat mit einer photohärtbaren Beschichtungszusammensetzung, umfassend eine Mischung von:
a) 25 bis 65 Gew.-%, bezogen auf die Gesamtfeststoffe, mindestens eines nicht hydrolysierten Epoxy(alkoxy) silans;
b) 20 bis 60 Gew.-%, bezogen auf die Gesamtfeststoffe, mindestens eine Dispersion von anorganischen Nanopartikeln und mindestens einem Acrylat;
c) 5 bis 20 Gew.-% mindestens eines Acrylat-Bindemittels oder Silan-Bindemittels und
d) mindestens einen radikalischen Photoinitiator, einen kationischen Photoinitiator oder eine Kombination davon;
beschichtet und die Beschichtung aus der photohärtenden Zusammensetzung mit UV-Bestrahlung härtet;
wobei das Verfahren keinen Hydrolyseschritt vor der Härtung umfasst.

9. Verfahren nach Anspruch 8, wobei das optische Substrat aus der Gruppe bestehend aus thermoplastischen, duroplastischen und mineralischen optischen Substraten ausgewählt wird.

10. Verfahren nach Anspruch 9, wobei das optische Substrat aus der Gruppe bestehend aus Polycarbonat, Poly(thio)urethanen, Acrylharzen und Diethylenglykolbis(allylcarbonat) ausgewählt wird.

11. Verfahren nach einem der Ansprüche 8 bis 10, bei dem man ferner die photohärtbare Zusammensetzung vor dem Härten trocknet.

12. Optischer Artikel mit mindestens einer Hauptoberfläche, umfassend eine Beschichtung, die durch Abscheiden einer photohärtbaren Beschichtungszusammensetzung, umfassend eine Mischung von:
a) 25 bis 65 Gew.-%, bezogen auf die Gesamtfeststoffe, mindestens eines nicht hydrolysierten Epoxy(alkoxy) silans;
b) 20 bis 60 Gew.-%, bezogen auf die Gesamtfeststoffe, mindestens einer Dispersion von anorganischen Nanopartikeln und mindestens einem Acrylat;
c) 5 bis 20 Gew.-% mindestens eines Acrylat-Bindemittels oder Silan-Bindemittels und
d) mindestens einen radikalischen Photoinitiator, einen kationischen Photoinitiator oder eine Kombination davon;
und Härten der Beschichtung aus der photohärtbaren Zusammensetzung erhalten wird, was einen optischen Artikel mit einer Beschichtung, die bei Prüfung gemäß ASTM F735 eine relative Abriebfestigkeit von mindestens 2,5 aufweist, ergibt.

## Revendications

1. Composition de revêtement photodurcissable comprenant un mélange de :
a) 25 à 65 % en poids des solides totaux d'au moins un époxy(alcoxy)silane non hydrolysé ;
b) 20 à 60 % en poids des solides totaux d'au moins une dispersion de nanoparticules inorganiques et d'au moins un acrylate ;
c) 5 à 20 % en poids d'au moins un liant d'acrylate ou liant de silane ; et
d) au moins un photoamorceur radicalaire, un photoamorceur cationique, ou une combinaison de ceux-ci ; où la composition ne comprend pas un époxy(alcoxy)silane hydrolysé.

2. Composition selon la revendication 1, dans laquelle les nanoparticules inorganiques sont des nanoparticules de silice.

3. Composition selon la revendication 1 ou 2, dans laquelle le liant d'acrylate ou liant de silane est choisi dans le groupe constitué de : diacrylate de 1,4-butanediol, diacrylate de 1,6-hexanediol, triacrylate de triméthylolpropane, triacrylate de triméthylolpropane éthoxylé, triacrylate de glycérol propoxylé, tétraacrylate de pentaérythritol alcoxylé, vinyltriméthoxysilane, ou une combinaison de ceux-ci.

4. Composition selon l'une quelconque des revendications 1 à 3, où la composition comprend 0,5 à 20 parties en poids de photoamorceur.

5. Composition selon la revendication 4, dans laquelle le photoamorceur est choisi dans le groupe constitué de : un sel d'hexafluoroantimonate de triarylsulfonium, un sel d'hexafluorophosphate de triarylsulfonium, la 2-hydroxy-2-méthyl-1-phényl-1-propanone, l'oxyde de phénylbis (2,4, 6-triméthylbenzoyl)-phosphine, ou une combinaison de ceux-ci.

6. Composition selon l'une quelconque des revendications 1 à 5, où la composition comprend en outre 0,05 à 1 partie en poids d'un tensioactif.

7. Composition selon l'une quelconque des revendications 1 à 6, où la composition comprend en outre un solvant.

8. Procédé de fabrication d'un substrat à revêtement dur, résistant à l'abrasion, le procédé comprenant le revêtement d'un substrat optique avec une composition de revêtement photodurcissable comprenant un mélange de :
a) 25 à 65 % en poids des solides totaux d'au moins un époxy(alcoxy)silane non hydrolysé ;
b) 20 à 60 % en poids des solides totaux d'au moins une dispersion de nanoparticules inorganiques et d'au moins un acrylate ;
c) 5 à 20 % en poids d'au moins un liant d'acrylate ou liant de silane ; et
d) au moins un photoamorceur radicalaire, un photoamorceur cationique, ou une combinaison de ceux-ci ; et
le durcissement du revêtement de composition photodurcissable avec une irradiation UV ;
où le procédé ne comprend pas une étape d'hydrolyse avant le durcissement.

9. Procédé selon la revendication 8, dans lequel le substrat optique est choisi dans le groupe constitué de substrats optiques thermoplastiques, thermodurcis et minéraux.

10. Procédé selon la revendication 9, dans lequel le substrat optique est choisi dans le groupe constitué de polycarbonate, poly(thio)uréthanes, acryliques et bis (carbonate d'allyle) de diéthylène glycol.

11. Procédé selon l'une quelconque des revendications 8 à 10, comprenant en outre l'étape de séchage du revêtement de composition photodurcissable avant le durcissement.

12. Article optique comportant au moins une surface principale comprenant un revêtement obtenu par dépôt d'une composition de revêtement photodurcissable comprenant un mélange de :
a) 25 à 65 % en poids des solides totaux d'au moins un époxy(alcoxy)silane non hydrolysé ;
b) 20 à 60 % en poids des solides totaux d'au moins une dispersion de nanoparticules inorganiques et d'au moins un acrylate ;
c) 5 à 20 % en poids d'au moins un liant d'acrylate ou liant de silane ; et
d) au moins un photoamorceur radicalaire, un photoamorceur cationique, ou une combinaison de ceux-ci ;
et
durcissement du revêtement de composition photodurcissable pour produire un article optique comportant un revêtement qui présente une résistance relative à l'abrasion d'au moins 2,5, lorsqu'il est testé selon l'ASTM F735.
